# EUROPÄISCHE PATENTANMELDUNG

(11) **EP 2 669 106 A1**
(43) Veröffentlichungstag der Anmeldung: **04.12.2013**
(21) Anmeldenummer: 12004205.6
(22) Anmeldetag: 31.05.2012
(51) Int. Cl.: B60J 1/14

(54) **Vorrichtung zum Verschließen einer Öffnung in der Karosserie eines Fahrzeuges**

(71) Anmelder: Alux Luxar GmbH & Co.KG, 41352 Korschenbroich (DE)
(72) Erfinder: Nonnenmacher, Uwe, 40668 Meerbush (DE)
(74) Vertreter: Köchling, Conrad-Joachim

(57) **Zusammenfassung**

Die Erfindung betrifft eine Vorrichtung zum Verschließen einer Öffnung in der Karosserie eines Fahrzeuges, umfassend eine feststehende Platte (1), die eine Öffnung (2) aufweist, deren Ränder vom Umfang der feststehenden Platte (1) entfernt sind, eine gegenüber der feststehenden Platte (1) bewegliche Platte (3), die zum Verschließen der Öffnung (2) ausgebildet ist, wobei mit der beweglichen Platte (3) verbundene erste Verbindungsmittel (4) und mit der feststehenden Platte (1) verbundene zweite Verbindungsmittel (5) vorgesehen sind, die derart zusammenwirken, dass die bewegliche Platte (3) sich zwischen einer die Öffnung (2) verschließenden Verschlussstellung und einer Öffnungsstellung bewegen kann, sowie einer Sicherungseinrichtung, wobei die Sicherungseinrichtung eine Verliersicherung (6) ist, die einerseits an der feststehenden Platte (1) und/oder an der Karosserie neben der Öffnung und andererseits an dem ersten Verbindungsmittel (4) fixiert ist.

## Beschreibung

Die Erfindung betrifft eine Vorrichtung zum Verschließen einer Öffnung in der Karosserie eines Fahrzeuges, umfassend eine feststehende Platte, die eine Öffnung aufweist, deren Ränder vom Umfang der feststehenden Platte entfernt sind, eine gegenüber der feststehenden Platte bewegliche Platte, die zum Verschließen der Öffnung ausgebildet ist, wobei mit der beweglichen Platte verbundene erste Verbindungsmittel und mit der feststehenden Platte verbundene zweite Verbindungsmittel vorgesehen sind, die derart zusammenwirken, dass die bewegliche Platte sich zwischen einer die Öffnung verschließenden Verschlussstellung und einer Öffnungsstellung bewegen kann, sowie einer Sicherungseinrichtung.

Solche Vorrichtungen sind beispielsweise aus der DE 696 13 546 T2 und der EP 0 778 168 B2 bekannt. Bei den bekannten Vorrichtungen handelt es sich ebenso wie bei der hier vorliegenden Vorrichtung um ein Verschlusssystem, bei dem die Platten als Glasscheiben ausgebildet sind und eine rahmenlose Anordnung der Scheiben ineinander ermöglicht ist. Die im Stand der Technik bekannten Ausbildungen geben Lösungen an, bei denen einerseits die Verstellmöglichkeit der beweglichen Platte gewährleistet ist, um diese in die Schließstellung zu überführen oder in eine Öffnungsstellung. Des Weiteren geben diese Druckschriften auch Sicherungselemente an, um zu erreichen, dass im Falle des Bruches einer Scheibe die bewegliche Platte nicht verloren geht, sondern durch eine Sicherheitseinrichtung an der Karosserie des Fahrzeuges gehalten wird.

Bei der Lösung, die die DE 60 2004 010 033 T2 angibt, wird die Sicherungseinrichtung durch eine Anordnung erreicht, bei der ein Profil der beweglichen Platte mit einem Profil der feststehenden Platte verbunden ist, so dass im Falle des Bruches einer Platte die Teile nicht auseinanderfallen und die bewegliche Platte nicht verloren gehen kann. Bei der aus der EP 0 778 168 B2 bekannten Lösung wird ein Profil, welches an der feststehenden Platte angebracht ist und mit welchem die bewegliche Platte verbunden ist, am Rand bis zum Rand der feststehenden Platte verlängert und in diesem Bereich zwischen der Karosserie und der Platte eingeklemmt und geklebt, so dass auch hier eine Sicherung der beweglichen Platte erreicht ist, wenn eine Platte bricht.

Wie im Stand der Technik bekannt, kann die feststehende Platte einteilig oder mehrteilig sein. Auch kann die bewegliche Platte schwenkbar oder schiebbar sein.

Es ist bekannt und kann auch beim Erfindungsgegenstand vorgesehen sein, dass die feststehende Platte auf die Karosserie durch Kleben des Umfangs auf die Ränder der Karosserieöffnung aufgebracht werden kann. Dabei können die Ränder der Öffnung der Karosserie leicht nach innen versetzt sein, um zu erreichen, dass im Einbauzustand die feststehende Platte bündig in der Karosserie aufgenommen ist, so dass eine optisch durchgehende Fläche zwischen Karosserie und Vorrichtung erreicht wird. Die Verbindungsmittel, beispielsweise Beschlagteile oder dergleichen, sind vorzugsweise auf der Innenseite vorgesehen, so dass keine nach außen vorspringenden Teile vorhanden sind.

Üblicherweise sind Dichtungen und dergleichen vorzusehen, wie dies im Stand der Technik bekannt ist.

Nachteilig bei der bekannten Ausbildung ist, dass hierbei die Beschlagteile, also die Verbindungsmittel bzw. die Funktionselemente, anders gestaltet sein müssen als herkömmlich, um die gewünschte Sicherheitsfunktion zu erreichen.

Ausgehend von diesem Stand der Technik liegt der Erfindung die Aufgabe zugrunde, eine Vorrichtung gattungsgemäßer Art zu schaffen, bei der herkömmliche Vorrichtungen eingesetzt werden können und eine Nachrüstung mit einer Sicherungseinrichtung ohne weiteres möglich ist, ohne dass also wesentliche Teile der Vorrichtung geändert werden müssten. Zudem ist eine Aufgabe der Erfindung, eine weitere Lösung anzugeben, die neben den bekannten Lösungen gewerblich eingesetzt werden kann, wobei zudem hierdurch eine Bereicherung des Standes der Technik erreicht werden soll.

Zur Lösung dieser Aufgabe schlägt die Erfindung vor, dass die Sicherungseinrichtung eine Verliersicherung ist, die einerseits an der feststehenden Platte und/oder an der Karosserie neben der Öffnung und andererseits an dem ersten Verbindungsmittel fixiert ist.

Gemäß dieser Ausgestaltung ist bei ansonsten unverändertem Aufbau, wenn also eine Vorrichtung ohne Sicherungseinrichtung verwendet werden soll, zusätzlich eine Verliersicherung vorgesehen, die einerseits an der feststehenden Platte und andererseits an den ersten Verbindungsmitteln fixiert ist. Durch Anordnung dieser Verliersicherung wird erreicht, dass bei einem Bruch der feststehenden Platte die bewegliche Platte nicht verloren gehen kann, weil sie durch die Verliersicherung an der feststehenden Platte und/oder an der Karosserie selbst neben der Öffnung fixiert ist und an den ersten Verbindungsmitteln, so dass die bewegliche Platte über die Sicherungseinrichtung auch dann mit der feststehenden Platte und damit verbundenen Karosserieteilen oder mit der Karosserie selbst verbunden ist.

Vorzugsweise ist dabei vorgesehen, dass die Verbindungsmittel und die Sicherungseinrichtung auf der der Außenseite des Fahrzeugs abgewandten Seite der Platten angeordnet sind.

Hierdurch wird eine Einbausituation erzeugt, die das äußere Erscheinungsbild eines damit ausgerüsteten Fahrzeuges nicht beeinträchtigt.

Besonders bevorzugt ist vorgesehen, dass die Verliersicherung aus einem am ersten Verbindungsmittel befestigten ersten Ankerteil und einem an der feststehenden Platte und/oder der Karosserie neben der Öffnung befestigten zweiten Ankerteil, sowie einem die Ankerteile verbindenden flexiblen Zuganker besteht.

Die entsprechenden Ankerteile können in einfacher Weise an dem ersten Verbindungsmittel bzw. an der feststehenden Platte oder der Karosserie neben der Öffnung befestigt werden, beispielsweise mittels Klebung.

Bevorzugt ist dabei vorgesehen, dass der Zuganker ein Seil ist.

Auch ist vorgesehen, dass der Zuganker ein Stahlseil ist.

Hierdurch wird eine besonders stabile Sicherung erreicht. Um Schäden an der Karosserie und/oder den Glasplatten zu vermeiden, kann vorgesehen sein, dass das Seil oder das Stahlseil ummantelt ist.

Eine bevorzugte Weiterbildung wird darin gesehen, dass das erste Verbindungsmittel ein Profilstück ist, das an der Innenseite der beweglichen Platte fixiert ist und einen zu seinen Längsenden offenen Hohlraum bildet, wobei die Verliersicherung mit einem ersten Endteil in den Hohlraum verlegt und innenseitig an dem Profilstück befestigt ist.

Hierdurch ist eine einfache Zuführung der Verliersicherung zu dem Profilstück, welches das erste Verbindungsmittel bildet, ermöglicht. Zudem ist es in einfacher Weise möglich, das erste Endteil der Verliersicherung innenseitig an dem Profilstück zu befestigen, beispielsweise durch Verklebung oder auch in anderer Form.

Zudem ist bevorzugt vorgesehen, dass die Verliersicherung mit einem zweiten Endteil zwischen dem Rand der feststehenden Platte und einem Rand der Öffnung der Karosserie fixiert und eingeklemmt ist.

Gemäß dieser Ausgestaltung soll das zweite Endteil der Verliersicherung vorzugsweise neben dem ersten Verbindungsmittel zum Rand der feststehenden Platte abgeführt sein, so dass es dann zwischen dem äußeren Rand der feststehenden Platte und dem Rand der Öffnung der Karosserie eingeklemmt und fixiert ist. Auch hier kann wiederum die Fixierung durch Klebung erfolgen. Bevorzugt ist zudem vorgesehen, dass die Verbindungsmittel ein Schwenkgelenk bilden.

Hierdurch ist eine Ausgestaltung realisiert, bei der die bewegliche Platte relativ zur feststehenden Platte schwenkbeweglich angeordnet ist, um die Öffnung und das Schließen der Öffnung zu realisieren.

Eine alternative Lösung wird darin gesehen, dass die Verbindungsmittel eine Schiebeverbindung bilden.

Hierbei ist die bewegliche Platte schiebebeweglich relativ zur feststehenden Platte angeordnet, um die entsprechende Öffnung zu öffnen bzw. zu schließen.

Ein Ausführungsbeispiel der Erfindung ist in der Zeichnung dargestellt und im Folgenden näher beschrieben.

Es zeigt:

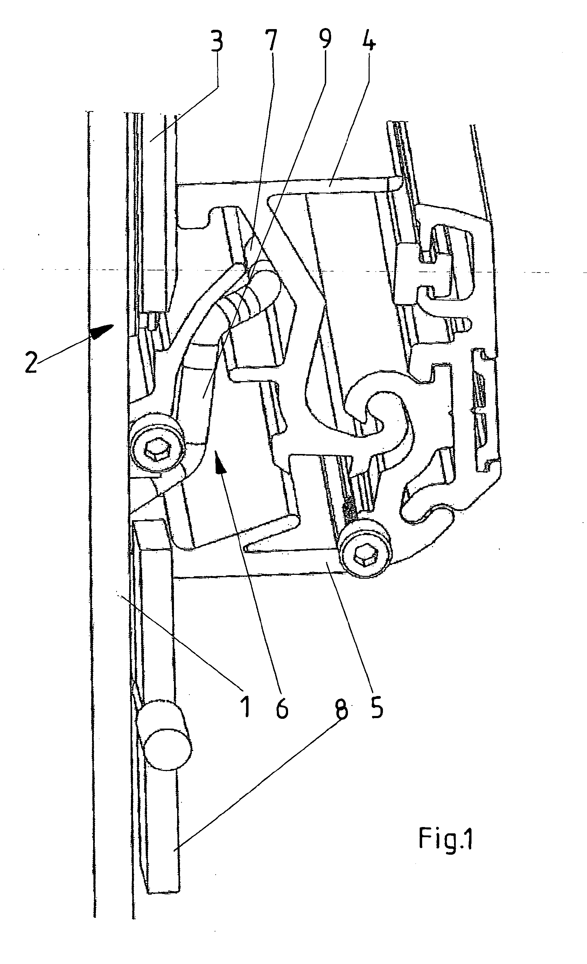

- Figur 1: wesentliche Bestandteile der Vorrichtung in einer schrägen Seitenansicht;

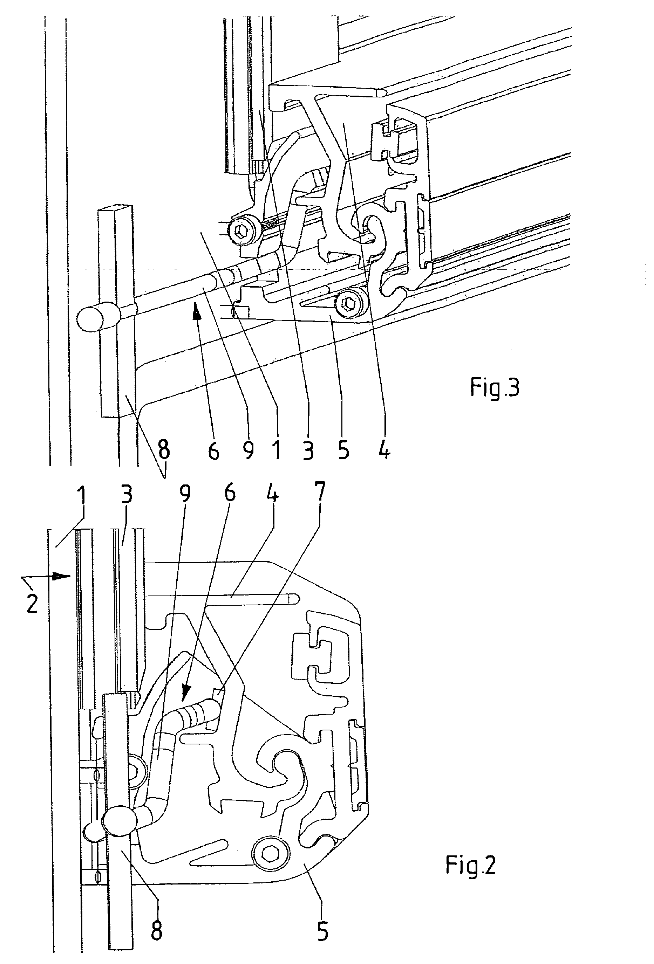

- Figur 2: desgleichen in orthogonaler Seitenansicht;
- Figur 3: desgleichen in einer schrägen Frontansicht.

In der Zeichnung sind die wesentlichen Bestandteile einer Vorrichtung zum Verschließen einer Öffnung in der Karosserie eines Fahrzeuges dargestellt. Das Fahrzeug und die Karosserie sind in der Zeichnung nicht gezeigt. Für den Einsatz der Vorrichtung weist die Karosserie eine Öffnung auf, in welche die Vorrichtung einsetzbar ist. Die Vorrichtung besteht dabei aus einer feststehenden Platte 1, die eine Öffnung 2 aufweist, deren Ränder vom Umfang der feststehenden Platte 1 entfernt sind. Ferner weist die Vorrichtung eine gegenüber der feststehenden Platte 1 bewegliche Platte 3 auf, die zum Verschließen der Öffnung 2 ausgebildet ist. Zusätzlich sind erste Verbindungsmittel 4 vorgesehen, die mit der beweglichen Platte 3 verbunden sind sowie zweite Verbindungsmittel 5, die mit der feststehenden Platte verbunden sind. Diese Verbindungsmittel wirken derart zusammen, dass die bewegliche Platte 3 sich zwischen einer die Öffnung verschließenden Verschlussstellung und einer Öffnungsstellung bewegen kann, in der die Öffnung in der feststehenden Platte 1 teilweise oder vollständig freigegeben ist. Des Weiteren ist eine Sicherungseinrichtung vorgesehen. Diese Sicherungseinrichtung ist eine Verliersicherung 6, die einerseits an der feststehenden Platte 1 und/oder an der Karosserie neben der Öffnung der Karosserie befestigt ist und andererseits an dem ersten Verbindungsmittel 4 fixiert ist.

Wie in der Zeichnung dargestellt, befinden sich die Verbindungsmittel 4, 5 auf der der Außenseite des Fahrzeugs abgewandten Seite der Platten 1 bzw. 3. Die Verliersicherung 6 besteht aus einem am ersten Verbindungsmittel 4 befestigten ersten Ankerteil 7 und einem an der feststehenden Platte 1 und/oder der Karosserie neben der Öffnung der Karosserie befestigten zweiten Ankerteil 8 sowie einem die Ankerteile 7, 8 verbindenden Zuganker 9, der als flexibles Element ausgebildet ist. Vorzugsweise ist der Zuganker 9 ein Seil, insbesondere ein Stahlseil, welches gegebenenfalls mit einer Kunststoffummantelung versehen ist.

Im Ausführungsbeispiel ist das erste Verbindungsmittel 4 ein Profilstück, das an der Innenseite der beweglichen Platte 3 fixiert ist, insbesondere angeklebt ist, und einen zu seinen Längsenden offenen Hohlraum bildet, wie in den Figuren anschaulich gezeigt ist. Die Verliersicherung 6 ist mit einem ersten Endteil, nämlich dem ersten Ankerteil 7 in den Hohlraum verlegt, so dass der flexible Zuganker teilweise in diesen Hohlraum hineinreicht, wobei das Ende, insbesondere das erste Ankerteil 7 innenseitig an dem Profilstück befestigt ist, vorzugsweise angeklebt ist. Die Verliersicherung 6 ist ferner mit einem zweiten Endteil, welches durch das zweite Ankerteil 8 gebildet ist, vorzugsweise zwischen dem Rand der feststehenden Platte 1 und einem Rand der Öffnung der Karosserie eingeklemmt und mittels Klebstoff fixiert. Die feststehende Platte 1 wird also in der Einbausituation so positioniert, dass innenliegend das zweite Ankerteil 8 vorgesehen ist und diese Innenseite gegen den vorzugsweise zurückgesetzten Rand der Öffnung der Karosserie angelegt und mittels Klebstoff fixiert wird.

Im Ausführungsbeispiel bilden die Verbindungsmittel 4, 5 ein Schwenkgelenk. Tatsächlich bestehen natürlich die beiden Platten 1, 3 aus Glas und weisen keine Rahmenausbildung oder dergleichen auf. Sofern durch einen Ereignisfall die feststehende Platte 1 zerbricht und damit die bewegliche Platte 3 nicht mehr im Verbund mit der feststehenden Platte 1 gehalten ist, wird durch die Verliersicherung 6 sichergestellt, dass die bewegliche Platte 3 nicht verloren gehen kann, sondern im Verbund erhalten bleibt.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

## Patentansprüche

1. Vorrichtung zum Verschließen einer Öffnung in der Karosserie eines Fahrzeuges, umfassend eine feststehende Platte (1), die eine Öffnung (2) aufweist, deren Ränder vom Umfang der feststehenden Platte (1) entfernt sind, eine gegenüber der feststehenden Platte (1) bewegliche Platte (3), die zum Verschließen der Öffnung (2) ausgebildet ist, wobei mit der beweglichen Platte (3) verbundene erste Verbindungsmittel (4) und mit der feststehenden Platte (1) verbundene zweite Verbindungsmittel (5) vorgesehen sind, die derart zusammenwirken, dass die bewegliche Platte (3) sich zwischen einer die Öffnung (2) verschließenden Verschlussstellung und einer Öffnungsstellung bewegen kann, sowie einer Sicherungseinrichtung, **dadurch gekennzeichnet, dass** die Sicherungseinrichtung eine Verliersicherung (6) ist, die einerseits an der feststehenden Platte (1) und/oder an der Karosserie neben der Öffnung und andererseits an dem ersten Verbindungsmittel (4) fixiert ist.

2. Vorrichtung nach Anspruch 1,
**dadurch gekennzeichnet, dass** die Verbindungsmittel (4, 5) und die Sicherungseinrichtung (6) auf der der Außenseite des Fahrzeugs abgewandten Seite der Platten (1, 3) angeordnet sind.

3. Vorrichtung nach Anspruch 1 oder 2,
**dadurch gekennzeichnet, dass** die Verliersicherung (6) aus einem am ersten Verbindungsmittel (4) befestigten ersten Ankerteil (7) und einem an der feststehenden Platte (1) und/oder der Karosserie neben der Öffnung befestigten zweiten Ankerteil (8), sowie einem die Ankerteile (7, 8) verbindenden flexiblen Zuganker (9) besteht.

4. Vorrichtung nach Anspruch 3,
**dadurch gekennzeichnet, dass** der Zuganker (9) ein Seil ist.

5. Vorrichtung nach Anspruch 4,
**dadurch gekennzeichnet, dass** der Zuganker (9) ein Stahlseil ist.

6. Vorrichtung nach Anspruch 3 oder 4,
**dadurch gekennzeichnet, dass** das Seil oder das Stahlseil ummantelt ist.

7. Vorrichtung nach einem der Ansprüche 1 bis 5,
**dadurch gekennzeichnet, dass** das erste Verbindungsmittel (4) ein Profilstück ist, das an der Innenseite der beweglichen Platte (3) fixiert ist und einen zu seinen Längsenden offenen Hohlraum bildet, wobei die Verliersicherung (6) mit einem ersten Endteil in den Hohlraum verlegt und innenseitig an dem Profilstück befestigt ist.

8. Vorrichtung nach einem der Ansprüche 1 bis 7,
**dadurch gekennzeichnet, dass** die Verliersicherung (6) mit einem zweiten Endteil zwischen dem Rand der feststehenden Platte (1) und einem Rand der Öffnung der Karosserie fixiert und eingeklemmt ist.

9. Vorrichtung nach einem der Ansprüche 1 bis 8,
**dadurch gekennzeichnet, dass** die Verbindungsmittel (3, 4) ein Schwenkgelenk bilden.

10. Vorrichtung nach einem der Ansprüche 1 bis 8, **dadurch gekennzeichnet, dass** die Verbindungsmittel (3, 4) eine Schiebeverbindung bilden.
